(19) Europäisches Patentamt
European Patent Office
Office européen des brevets

(11) **EP 4 571 099 A1**

(12) **EUROPEAN PATENT APPLICATION**

(43) Date of publication:
**18.06.2025 Bulletin 2025/25**

(21) Application number: **23307225.5**

(22) Date of filing: **15.12.2023**

(51) International Patent Classification (IPC):
**F03D 7/02** (2006.01)    **F03D 7/04** (2006.01)

(52) Cooperative Patent Classification (CPC):
**F03D 7/049; F03D 7/0204; F03D 7/045;**
**F03D 7/046;** F05B 2260/821; F05B 2270/20;
F05B 2270/32; F05B 2270/321; F05B 2270/329;
F05B 2270/404

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **TotalEnergies OneTech**
**92400 Courbevoie (FR)**
• **Institut Mines Telecom**
**91120 Palaiseau (FR)**

(72) Inventors:
• **KADOCHE, ELIE**
**92400 COURBEVOIE (FR)**
• **CARTON, Florence**
**92400 COURBEVOIE (FR)**
• **ENEAU, Cedric**
**92400 COURBEVOIE (FR)**
• **BIANCHI, Pascal**
**91120 PALAISEAU (FR)**
• **CIBLAT, Philippe**
**91120 PALAISEAU (FR)**

(74) Representative: **Lavoix**
**2, place d'Estienne d'Orves**
**75441 Paris Cedex 09 (FR)**

(54) **A CONTROL METHOD FOR CONTROLLING A WIND FARM, RELATED COMPUTER PROGRAM PRODUCT AND ELECTRONIC CONTROL DEVICE**

(57)    The present invention concerns a control method for controlling a wind farm (10) comprising a plurality of wind turbines (15i).

The control method comprises a receiving, for successive time instants, estimated general wind velocities and estimated wind directions of wind (W), on the wind farm.

The control method comprises determining, for an initial time instant, rotation commands by solving an optimization problem. The optimization problem aims at maximizing a power quantity representative of power generated by the wind farm, which comprises a first component and a second component,

The first component depends on a local wind velocity at the contact of each wind turbine at an initial time instant. The second component depends on a set of calculated rotation commands for the wind turbines to rotate toward the estimated wind directions for each further time instant.

The control method comprises sending the determined rotation command to each respective wind turbine.

FIG.1

EP 4 571 099 A1

## Description

The present invention concerns a control method for controlling a wind farm.

The present invention in addition concerns a computer program product and an electronic control device configured to implement such a method.

The present invention concerns the domain of piloting the orientation of wind turbines within a wind farm to improve its productivity.

The productivity of a wind turbine, i.e. the generated power, depends mainly on the velocity of the wind and its direction with respect to the wind turbine.

In particular, a wind turbine only produces energy if the wind reaching the wind turbine has a direction and velocity within a specific respective range. In particular, it is known the optimal wind production is reached when the wind turbine is facing the wind direction and when the wind velocity is neither too high, nor too small.

However, the wind reaching the wind turbine does not always have the same direction and velocity.

Thus, to improve the production of the wind turbine, it is known to control its yaw angle, i.e. its rotation along an elongation axis of the wind turbine, via a yaw actuator, to try to reach an optimal velocity and direction of the wind on blades of the wind turbine.

When considering a farm of wind turbines, it is known to measure the wind velocity and direction at a point close to the wind farm. From this measurement, it is known apply a control technique, at each time instant, consisting in commanding the yaw angle of each turbine to have each wind turbine tracking said measured wind direction.

However, this techniques faces two mains issues that make it strongly suboptimal.

Firstly, wind turbines are massive elements, so that the variation of their yaw angle cannot be greater than a certain threshold, e.g. few degrees by minute. Thus, if the wind direction is changing rapidly, it is not possible for the wind turbine to track such changes properly. In other words, in this case, the yaw actuators are always late compared the wind changes. Thus, at each time, the wind turbines do not have the appropriate yaw angle, with respect to the wind direction.

Secondly, such control technique does not consider the wake effect of the wind turbines. Actually, in a wind farm, when wind flows through a first wind turbine, the wind loses energy by driving the blades of the first turbines, inducing a wind velocity decrease. Such decrease depends on the yaw orientation of the first wind turbine and on the direction and velocity of the wind facing said first wind turbine. Thus, a second wind turbine receiving the wind influenced by the first wind turbine, i.e. its local wind, would not have the same optimal yaw inclination as the first wind turbine.

Due to the two previously presented issues, said control technique, consisting in trying to track the direction of the wind on the wind farm, leads to a suboptimal energy production of the wind farm.

It thus exists a need for a better control method improving the energy production of the wind farm.

To this end, the invention concerns a control method for controlling a wind farm a control method for controlling a wind farm comprising a plurality of wind turbines, based on a plurality of estimated general wind velocities and a plurality of estimated wind directions of the wind on the wind farm,

each wind turbine being configured, upon receiving a rotation command, to rotate, around an elongation axis respective of the wind turbine, according to said rotation command,
the method being implemented by an electronic control device and comprising the following steps at an initial time instant:

- receiving, for a set of successive time instants, estimated general wind velocities and estimated wind directions of wind, on the wind farm, each estimated general wind velocity and each estimated wind direction being associated to a respective time instant;
- for said initial time instant, determining, for each wind turbine, a respective rotation command from the set of estimated wind directions and the set of velocities of the wind on the wind farm, by solving an optimization problem,

the optimization problem aiming at maximizing a power quantity representative of a power generated by the wind farm for said set of successive time instants, the power quantity comprising a first component and a second component, the first component depending on a local wind velocity at the contact of each wind turbine at said initial time instant, each local wind velocity depending on the rotation command of each wind turbine at said initial time instant, the second component depending on a set of calculated rotation commands for the wind turbines to rotate toward the estimated wind directions for each further time instant,

- sending the determined rotation command to each respective wind turbine for the rotation of each wind turbine.

Since the control method according to the invention comprises, for determining the rotation command at an initial time instant, optimizing a quantity depending on the power generated at further time instant, the first issue is overcome.

In addition, the control method according to the invention makes it possible to increase the energy production of the wind farm since the control takes into consideration the local wind velocity at the contact of each wind turbine at said first time instant. The second issue is thus at least partially overcome.

According to specific embodiment of the invention, the control method comprises one or more of the following features, taken solely, or according to any feasible combination:

- each local wind velocity is obtained by simulating the influence of each wind turbine on the wind reaching the other wind turbines;
- each rotation command is comprised between a lower bound and an upper bound;
- the receiving, determining and sending steps are iterated several times;
- the first component further depends on the relative yaw angle between a blade's rotation axis of each wind turbine and the wind direction,
  each relative yaw angle being determined based on the rotation command of the considered wind turbine at said initial time instant;
- the first component comprises a first contribution for each wind turbine,

  each first contribution being equal to zero if the respective relative yaw angle between a blade's rotation axis of each wind turbine and the wind direction is lower than a cut-in angle value or higher than a cut-out angle value,
  each first contribution depending on the local wind velocity and the relative yaw angle, if said relative yaw angle is comprised between the cut-in angle value and the cut-out angle value;

- the first component is equal to:

$$C1 = \sum_{i=0}^{N-1} C1^i = \frac{1}{N} \sum_{i=0}^{N-1} \Phi\left(v_t^{i\,\prime}\right) . \cos^p\left(\alpha_{t+1}^{i}{}'\right) . \mathbb{1}_{[\alpha_{cut-in};\alpha_{cut-out}]}\left(\alpha_{t+1}^{i}{}'\right)$$

wherein:

$\Phi\left(v_t^{i\,\prime}\right)$ is the theoretical power output from a wind turbine facing a wind with a local wind velocity vi',

$\cos^p\left(\alpha_{t+1}^{i}{}'\right)$ is the cosine of the relative yaw angle at the power of p, representing the influence of a misalignement between the wind turbine (15i) and the wind direction,

$$\mathbb{1}_{[\alpha_{cut-in};\alpha_{cut-out}]}\left(\alpha_{t+1}^{i}{}'\right)$$

is the indicator function equal to 1 if the relative yaw angle is comprised between the cut-in and cut-out angle values, and 0 else case, and *N* is the number of wind turbines in the wind farm;

- the second component comprises, for each further time instant, a temporal variable,
  each temporal variable comprising a second contribution for each wind turbine, each second contribution depending on an expected relative yaw angle between the wind turbine and the wind direction, considering that the wind turbine implemented the calculated rotation command;
- each temporal variable comprises a factor making decrease the influence, on the second component, of temporal variable as a function of the further time instants remoting from the initial time instant;
- the second component is equal to

$$C2 = \sum_{k=1}^{L} \gamma^{k-1} \Phi(V'_{t+k}) \left(1 - \frac{1}{N} \frac{1}{180} \sum_{i=0}^{N-1} |\hat{\alpha}_{t+k+1}^{i}{}'| \right)$$

wherein:

y is a predefined value defining the factor ($\gamma^{k-1}$),
$\Phi(V'_{t+k})$ is the theoretical power output from a wind turbine facing a wind with a general wind velocity equal to $V'_{t+k}$,
$\hat{\alpha}^{i}_{t+k+1}{}'$ is the expected relative yaw angle at a further time instant $t + k + 1$,
L is the number of considered time instants, and
$N$ is the number of wind turbines in the wind farm;

- at each further time instant, each calculated rotation command is determined:

  ◦ by aligning the wind turbine toward the wind direction if said calculated rotation command is comprised between a lower bound and an upper bound, or
  ◦ by selecting, among the lower bound and the upper bound, the one minimizing the expected relative yaw angle else case;

- the step of determining the rotation commands, comprises the following sub steps:

  ◦ obtaining, for each wind turbine, a respective rotation command candidate, forming a set of rotation command candidates for the wind farm,
  ◦ determining the first component by:

    + determining, for each wind turbine, the local wind velocity of said wind turbine, from the estimated wind direction at the initial time instant, from the estimated general velocity of the wind at the initial time instant, and from the set of rotation command candidates,
    + calculating the first component from each local wind velocity,

  ◦ determining the second component by:

    + for each other further time instants, determining the calculated rotation command from the estimated wind direction at said time instant further,
    + calculating the second component from each calculated rotation commands, and

  ◦ calculating the power quantity from the first and second components,
  the sub steps of obtaining, determining and calculating being iterated for a plurality of rotation command candidates sets,
  the step of determining the rotation command in addition comprising the sub step of selecting the rotation commands as the set of rotation command candidate, maximizing the power quantity; and

- the control method comprises between the receiving step and the determining step, a pretreatment step, wherein a treatment is applied on the estimated wind directions on the wind farm to obtain treated wind directions,

  the determining step using the treated wind directions instead of the estimated wind directions,
  preferably, the treatment being a low-pass filtering;

**[0018]** The present invention also concerns a computer program product comprising instructions which, when being executed by a computer, implement such a control method.
**[0019]** The present invention also concerns an electronic control device for controlling a wind farm comprising a plurality of wind turbines, based on a plurality of estimated general wind velocities and a plurality of estimated wind directions direction of the wind on the wind farm,

each wind turbine being configured, upon receiving a rotation command, to rotate, around an elongation axis respective of the wind turbine, accordingly with the rotation command,
the electronic control device comprising:

- a receiving module configured to receive, at an initial time instant, estimated general wind velocities and estimated wind directions of the wind, on the wind farm for a set of successive time instants, each estimated general wind velocity and each estimated wind direction being associated to a respective time instant;

- a calculating module configured to determine, for said initial time instant, a respective rotation command for each wind turbine, from the set of estimated wind directions and the set of estimated general wind velocities on the wind farm, by solving an optimization problem,

the optimization problem aiming at maximizing a power quantity representative of a power generated by the wind farm for said set of successive time instants, the power quantity comprising a first component and a second component, the first component depending on a local wind velocity at the contact of each wind turbine at said initial time instant, each local wind velocity depending on the rotation command of each wind turbine at said initial time instant, the second component depending on a set of calculated rotation commands for the wind turbines to rotate toward the estimated wind directions for each further time instants,

- a sending module configured to send the determined rotation command to each respective wind turbine for the rotation of each wind turbine..

The present invention also concerns a wind farm comprising a plurality of wind turbines and a control system, the control system comprising such an electronic control device.

The invention will be better understood upon reading the following description, only given as an example of embodiments of the invention, and in reference to the attached Figures, among which:

- Figure 1 is schematic view of wind farm comprising an electronic control device, according to the invention, for a controlling the wind farm;
- Figure 2 is a front view of a wind turbine belonging to the wind farm of Figure 1;
- Figure 3 is schematic top view of a wind turbine belonging to the wind farm of Figure 1;
- Figure 4 is a curve of a theoretical power output from a wind turbine as a function of a local wind velocity received by a wind turbine perfectly facing the wind;
- Figure 5 is schematic view of function implemented by the control system represented in figure 1;
- Figure 6 is another schematic view of the same function as in figure 5; and
- Figure 7 is flowchart of a control method implemented by the electronic control device represented in Figure 1.

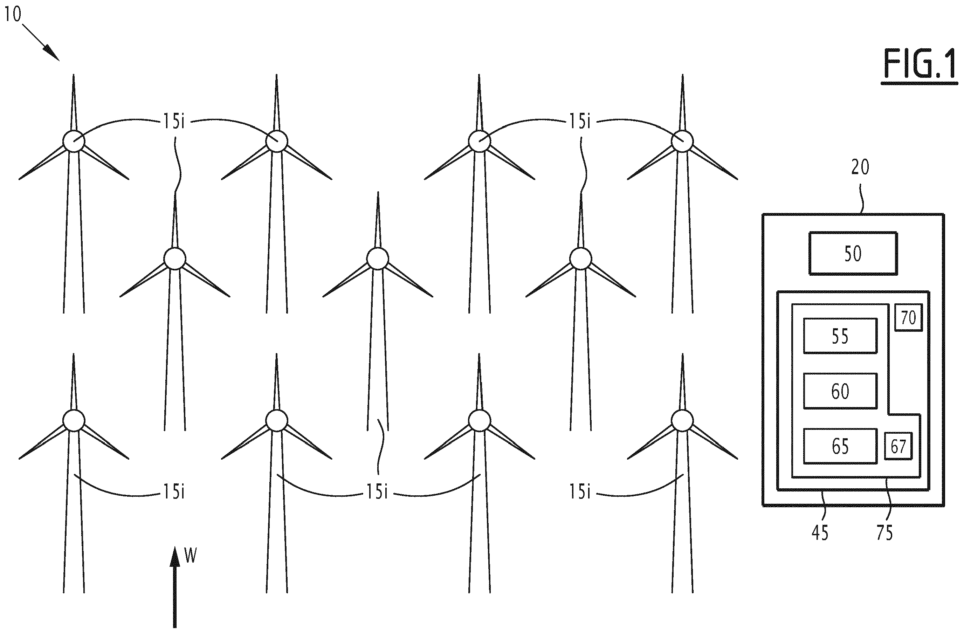

In Figure 1 is represented a wind farm 10. The wind farm 10 is for example on offshore wind farm. Alternatively, the wind farm 10 is an onshore wind farm.

The wind farm 10 comprises several wind turbines 15i, for example a number N of wind turbines 15i, with "i" evolving from 0 to N-1, and a control system 20. The number N is at least two, for example greater than ten, twenty, fifty or even a hundred.

As represented in figure 1, the wind turbines 15i of the wind farm 10 are for example bottom-fixed wind turbines, i.e. wind turbines comprising a monopile solidly fixed to the ground, or to the seabed in case of offshore wind turbine.

According to a non-shown variant, and only in the case of an offshore wind farm, the wind turbines are floating wind turbines, i.e. each wind turbine comprises a foundation floating on a water body and bearing the rest of the wind turbine.

Alternatively, and only in case of an offshore wind farm, the wind farm is mixed, comprising both bottom-fixed and floating wind turbines.

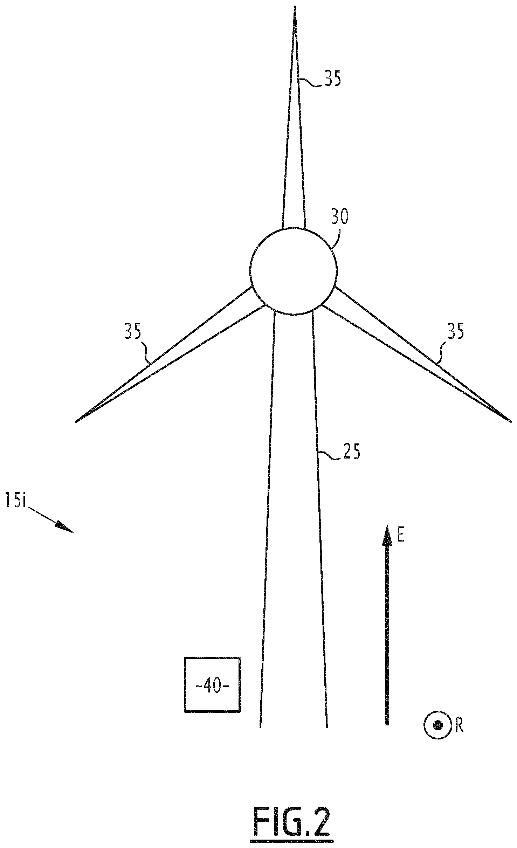

Figure 2 represents a front view of one wind turbine 15i of the wind farm 10.

The wind turbine 15i comprises a tower 25 extending along an elongation axis E.

The wind turbine 15i in addition comprises a rotor 30, for example located at an extremity of the tower 25. The rotor 30 comprises blades 35 configured to rotate around a rotation axis R, which is sensibly perpendicular to the elongation axis E.

In a known manner, the blades 35 are configured to be driven in rotation around the rotation axis R, by the wind W flowing through the wind turbine 15i. Then, under the effect of wind, the blades drive the rotor in rotation around the rotation axis R, thus producing electricity.

The wind turbine 15i in addition comprises a yaw actuator 40 connected to the control system 20.

The yaw actuator 40 is configured, upon receiving a rotation command $u_t^i$ from the control system 20 at an initial time instant $t$, to make the rotor 30 rotate around the elongation axis E by an angle defined in the received rotation command $u_t^i$, so that the rotor 30 reaches a desired absolute yaw angle $\beta_{t+1}^i$ at the new time instant $t + 1$, in a predefined reference frame.

Mathematically, the configuration of each yaw actuator 40 is formulated according to the following equation:

[1]

$$\beta_{t+1}^i = f_{control}\left(\beta_t^i, u_t^i\right) = \left(\beta_t^i + u_t^i\right) mod\ 360$$

where $f_{control}$ is the control function of the yaw actuator 40, and
for any quantity $a$, $(a)mod\ 360$ is the rest of the Euclidian division of the quantity $a$ by 360.

Each absolute yaw angle $\beta_t^i$ is preferably defined as the angle formed by the rotation axis R of the wind turbine 15i, i.e. of its blade, in a predefined reference frame, for example pointing toward the cardinal points.

Back to Figure 1, the control system 20 comprises an electronic control device 45 and preferably a wind sensor 50.

The control device 45 is connected to each wind turbine 15 and preferably to the wind sensor 50.

The optional wind sensor 50 is configured to estimate the general wind velocity $\{V'_{t+k}\}_{k \in [\![0;L]\!]}$ and direction $\{K'_{t+k}\}_{k \in [\![0;L]\!]}$ on the wind farm 10, at plurality of successive time instants $(t+k)_{k \in [\![0;L]\!]}$, where $V_{t+k}'$ is the estimated wind velocity at time instant $t + k$ and $K_{t+k}'$ in the estimated wind direction at time instant $t + k$.

In the present application, the term "estimated" is used to mean both measured and predicted.

It is clear that the notation $\{t+k\}_{k \in [\![0;L]\!]}$ represents a set of successive time instants comprising $L + 1$ time instants and starting by the initial time instant $t$. A delay between two successive time instants is for example constant, and preferably comprised between ten seconds and twenty minutes.

Alternatively, the delay between two successive time instants is not constant.

Thus the notation $\{a_k\}_{k \in [\![0;L]\!]}$ is the set of successive elements $a_k$ for $k$ evolving from 0 to L. It leads that $\{t+k\}_{k \in [\![0;L]\!]}$ is equivalent to the set $t, t + 1, ..., t + L$. Similarly, $\{V'_{t+k}\}_{k \in [\![0;L]\!]}$ is equivalent to the set $V'_t, V'_{t+1}, ..., V'_{t+L}$, and $\{K'_{t+k}\}_{k \in [\![0;L]\!]}$ is equivalent to the set $K'_t, K'_{t+1}, ..., K'_{t+L}$.

In particular, the wind sensor 50 is preferably configured to measure the general wind velocity $V'_t$ and wind direction $K'_t$ and an initial time instant $t$, and to predict the general wind velocity $\{V'_{t+k}\}_{k \in [\![0;L]\!]}$ and direction $\{K'_{t+k}\}_{k \in [\![0;L]\!]}$ for further time instants $\{t+k\}_{k \in [\![0;L]\!]}$, via known forecast techniques.

The control device 45 comprises a receiving module 55, a calculating module 60, a sending module 65 and preferably a pretreatment module 67.

In the example shown in Figure 1, the control device 25 is a computer. It comprises a processor 70 and a memory 75 associated with the processor 70.

In the example shown in Figure 1, the receiving module 55, the calculating module 60, and optionally the sending module 65 and/or the pretreatment module 67, are each implemented in the form of software, or a software brick, and can be executed by the processor 70. The memory 75 of the control device 45 is then able to store a receiving software, a calculating software, a sending software, and optionally a pretreatment software.

When the control device 45 is implemented in the form of one or more software programs, i.e. in the form of a computer program, it can also be recorded on a computer-readable medium (not shown). The computer-readable medium is, for example, a medium capable of storing electronic instructions and of being coupled to a bus of a computer system. By way of example, the readable medium is an optical disk, a magneto-optical disk, a ROM memory, a RAM memory, any type of non-volatile memory (e.g. EPROM, EEPROM, FLASH, NVRAM), a magnetic card or an optical card. A computer program containing software instructions is stored on the readable medium.

Alternatively, and not shown here, the receiving module 55, the calculating module 60, the sending module 65 and optionally the pretreatment module 67, are each implemented in the form of a programmable logic component, such as an FPGA (Field Programmable Gate Array), or an integrated circuit, such as an ASIC (Application Specific Integrated Circuit).

The receiving module 55 is configured to receive, for the set of successive time instants $\{t+k\}_{k \in [\![0;L]\!]}$, the estimated wind velocities $\{V'_{t+k}\}_{k \in [\![0;L]\!]}$ and the estimated wind directions $\{K'_{t+k}\}_{k \in [\![0;L]\!]}$ of the wind $W$, on the wind farm 10.

Preferably, the receiving module 55 is configured to received said estimated general wind velocities $\{V'_{t+k}\}_{k\in[\![0;L]\!]}$ and directions $\{K'_{t+k}\}_{k\in[\![0;L]\!]}$, from the wind sensor 50.

Alternatively, if the control system 20 does not comprise any wind sensor 50, the receiving module 55 is configured to receive said wind velocities $\{V'_{t+k}\}_{k\in[\![0;L]\!]}$ and directions $\{V'_{t+k}\}_{k\in[\![0;L]\!]}$, from an external device, not represented, for example a general weather forecasting system excluded from the control system 20.

In addition, the receiving module 55 is configured to receive the absolute yaw angle $\beta^i_t$ of each wind turbine 15i at said first time instant $t$. Preferably, the receiving module 55 is configured to receive each absolute yaw angle $\beta^i_t$ from the respective yaw actuator 40, and/or to keep it in its memory 75.

The calculating module 60 is configured to determine, at said first time instant t and for each wind turbine 15i, a respective rotation command $u^i_t$, from the estimated wind directions $\{K'_{t+k}\}_{k\in[\![0;L]\!]}$ and estimated general wind velocities of the wind $\{V'_{t+k}\}_{k\in[\![0;L]\!]}$ on the wind farm 10, by solving an optimization problem.

The optimization problem aims at maximizing a power quantity $f_{obj}$ representative of a power generated by the wind farm 10 for said set of successive time instants $\{t+k\}_{k\in[\![0;L]\!]}$, the power quantity $f_{obj}$ comprising a first component $C$1 and a second component $C$2.

The first component $C$1 depends on local wind velocities $\{v^{i'}_t\}_{i\in[\![0;N-1]\!]}$ at the contact of each wind turbine 15i at said first time instant $t$, which is estimated from the rotation commands $\{u^i_t\}_{i\in[\![0;N-1]\!]}$ of each wind turbine 15i at said first time instant $t$.

Optionally, the first component $C$1 in addition depends on the relative yaw angles $\{\alpha^i_{t+1}{}'\}_{i\in[\![0;N-1]\!]}$ between the rotation axis R of each wind turbine 15i and the wind direction $K'_t$ at the time instant $t+1$ next to the initial time instant $t$, wherein each relative yaw angle $\alpha^i_{t+1}{}'$ is determined based on the rotation command $u^i_t$ of the considered wind turbine 15i at said first time instant $t$.

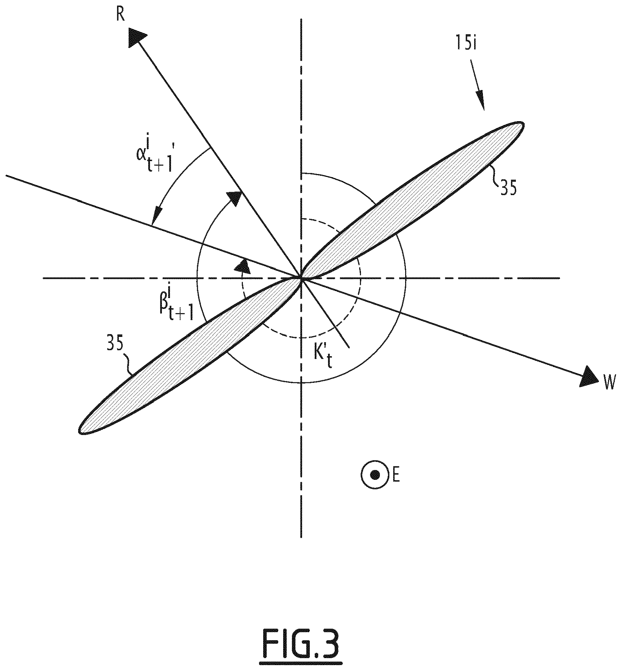

As an example and in reference to Figure 3 showing a top view of a respective wind turbine 15i, for a wind $W$ having a direction $K_t'$ reaching a respective wind turbine 15i having an absolute yaw angle $\beta^i_t$, a relative yaw angle $\alpha^i_{t+1}{}'$ between the wind $W$ and the wind turbine 15i, is equal to the following equation:

[2]

$$\alpha^i_{t+1}{}' = f_{yaw}\left(K_t', \beta^i_{t+1}\right) = \left(\left(K_t' - \beta^i_{t+1} + 180\right) mod\ 360\right) - 180$$

In this example, the wind direction $K'_t$ is defined as the angle between a mean orientation the wind $W$ between time instants $t$ and $t+1$, and a predefined frame, the frame for example pointing toward the cardinal points.

In the previous equation [2], adding and subtracting by 180 ensures that the relative yaw angle $\alpha^i_{t+1}{}'$ stays within the range defined by -180° and +180°. As visible in Figure 3, it is ensured that $\left(\beta^i_{t+1} + \alpha^i_{t+1}{}'\right) mod\ 360 = K'_t$. Then, a positive value of the relative yaw angle $\alpha^i_{t+1}{}'$ indicates that the wind turbine 15 is rotated anti-clockwise from the wind direction $K'_t$, while a negative value of the relative yaw angle $\alpha^i_{t+1}{}'$ indicates that the wind turbine 15 is rotated clockwise from the wind direction $K_t'$.

Based on the preceding equation [2], each relative yaw angle $\alpha_{t+1}^{i}{}'$ depends on the corresponding absolute yaw angle $\beta_{t+1}^{i}$ and the general wind direction $K_t'$. One may notice that, based on equation [1], each absolute yaw angle $\beta_{t+1}^{i}$ at the next time instant $t+1$ depends on the corresponding rotation command $u_t^i$ at the initial time instant $t$. Thus, each relative yaw angle $\alpha_{t+1}^{i}{}'$ depends on said rotation command $u_t^i$.

According to an optional complement, the first component C1 comprises a first contribution C1$^i$ for each wind turbine 15i. Each first contribution C1$^i$ is equal to zero if the respective relative yaw angle $\alpha_{t+1}^{i}{}'$ between each wind turbine 15i and the wind direction $K'_t$ is lower than a cut-in angle value $\alpha_{cut\text{-}in}$ or higher than a cut-out angle value $\alpha'_{cut\text{-}out}$. As an example, each first contribution C1$^i$ is equal to the product of a first factor F1$^i$, and the indicator function

$$\mathbb{1}_{[\alpha_{cut-in};\alpha_{cut-out}]}(\alpha_{t+1}^{i}{}')$$

, the first factor F1$^i$ depending on the local wind velocity $v_t^{i}{}'$.

Actually, no matter the local wind velocity $v_t^{i}{}'$, if the relative yaw angle $\alpha_{t+1}^{i}{}'$ is such that a misalignment of the wind turbine 15i with the wind W is too high, the wind turbine 15i is shut down.

In other words, the indicator function on the relative yaw angle

$$\alpha_{t+1}^{i}{}'$$

is such that:

[3]

$$\mathbb{1}_{[\alpha_{cut-in};\alpha_{cut-out}]}\left(\alpha_{t+1}^{i}{}'\right) = \begin{cases} 1 & if \ \alpha_{cut-in} \le \alpha_{t+1}^{i}{}' \le \alpha_{cut-out} \\ 0 & elsecase \end{cases}$$

An example of the first factor F1$^i$ is further detailed.

In this example, the first factor F1$^i$ depends on the theoretical power $\Phi$ output from a wind turbine 15i exactly facing the wind W, which is preferably calculated according to the following equation:

[4]

$$\Phi\left(v_t^{i}{}'\right) = \frac{1}{2}.\rho.A.v_t^{i}{}'^{\,3}.C_p(v_t^{i}{}')$$

where:

- $v_t^{i}{}'$ is the local wind velocity of the ith wind turbine 15i at the initial time instant $t$,
- $\rho$ is the air density, in kg/m$^3$,
- $A$ is the rotor blade area, and
- $C_p$ is a power coefficient respective of the wind turbine 15i.

The air density $\rho$, the rotor blade area $A$ and the power coefficient $C_p$ are preferably predefined.

In this example, the power coefficient $C_p$ preferably defines a cut-in velocity value $v_{cut\text{-}in}$ and a cut-out velocity value $v_{cut\text{-}out}$. In other words, if the local wind velocity $v_t^{i}{}'$ is smaller than the cut-in velocity value $v_{cut\text{-}in}$, the wind turbine 15i does not output power since said velocity is not high enough to drive the blades. On the contrary, if the local wind velocity

$v_t^{i\prime}$ is higher than the cut-out velocity value $v_{cut\text{-}out}$, the power generated reaches a threshold and remains constant.

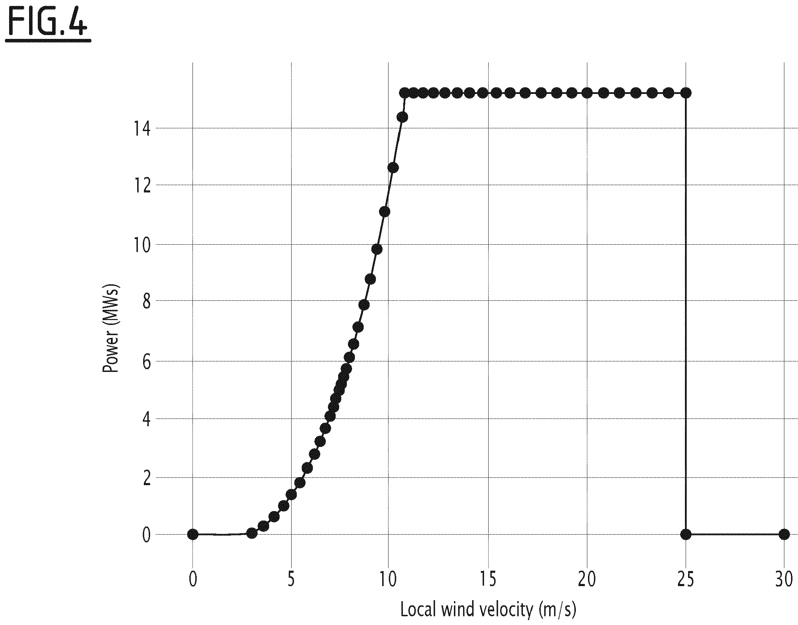

An example of a theoretical power curve is shown in Figure 4 representing the evolution of the theoretical power $\Phi$ as a function of the local wind velocity $v_t^{i\prime}$ for a wind turbine 15i perfectly facing the wind *W*.

In a preferred example, the first factor $F1^i$ in addition takes into consideration that a yaw misalignment is possible between the wind *W* and the wind turbine 15i, i.e. $\alpha_{t+1}^{i}{}' \neq 0$, the first factor $F1^i$ then being preferably equal to the following equation

[5]

$$F1^i = \Phi\left(v_t^{i\prime}\right).\cos^p\left(\alpha_{t+1}^{i}{}'\right)$$

where:

- p is a tunable parameter, and
- $\cos^p\left(\alpha_{t+1}^{i}{}'\right)$ is the cosine of the relative yaw angle $\alpha_{t+1}^{i}{}'$ at the power of p.

Thus, in this example, the first contribution $C1^i$ is preferably equal to

[6]

$$C1^i = f_{power}\left(v_t^i, \alpha_{t+1}^{i}{}'\right) = \Phi\left(v_t^{i\prime}\right).\cos^p\left(\alpha_{t+1}^{i}{}'\right).\mathbb{1}_{[\alpha_{cut-in};\alpha_{cut-out}]}\left(\alpha_{t+1}^{i}{}'\right)$$

where $f_{power}$ is the function associating to a couple of local velocity $v_t^{i\prime}$ and relative yaw angle $\alpha_{t+1}^{i}{}'$, and estimation of the power output from the wind turbine 15i.

In the preceding example, the first component $C1$ is thus preferably equal to the sum of the first contribution $C1^i$ of each wind turbine 15i, normalized by the number of wind turbines 15i, i.e. according to the following equation:

[7]

$$C1 = \frac{1}{N}.\sum_{i=0}^{N-1} C1^i = \frac{1}{N}.\sum_{i=0}^{N-1} \Phi\left(v_t^{i\prime}\right).\cos^p\left(\alpha_{t+1}^{i}{}'\right).\mathbb{1}_{[\alpha_{cut-in};\alpha_{cut-out}]}\left(\alpha_{t+1}^{i}{}'\right)$$

One can notice that considering the relative yaw angles $\alpha_{t+1}^{i}{}'$ at the next time instant *t* + 1 instead of the relative yaw angles $\alpha_t^i$ at the initial time instant *t,* is just a convention choice to represent that the power considered is the power between said first time instant *t* and the next time instant *t* + 1.

In the considered example, it has not been defined yet how the local wind velocities $v_t^{i\prime}$ may be obtained.

One way to determine the local wind velocities $v_t^{i\prime}$ is to proceed to a simulation of the wind flowing around the wind turbines 15i between time instants *t* and *t* + 1. This simulation, further denoted $f_{simulation}$, makes it possible to determine, for each wind turbine 15i, the local wind velocity $v_t^{i\prime}$ from the estimated general wind velocity $V'_t$, the wind direction $K'_t$ and each relative yaw angle $\left\{\alpha_{t+1}^{i}{}'\right\}_{i\in[\![0;N-1]\!]}$ preferably such that:

[8]

$$v_t^{i\,\prime} = f_{simulation}^{i}\left(K_t^{\prime}, V_t^{\prime}, \left\{\alpha_{t+1}^{i}{}^{\prime}\right\}_{i\in[\![0;N-1]\!]}\right)$$

where $f_{simulation}^{i}$ is the simulation providing the local wind velocity $v_t^{i\,\prime}$ of the ith wind turbine 15i.

For example, the simulation is performed via the open-source tool FLORIS (FLOw Redirection and Induction in Steady state), known per se.

Finally, merging equations [1], [2], [7] and [8], a complete form of the first component C1 is for example according to the following set of equations:

[9]

$$C1 = \frac{1}{N} \cdot \sum_{i=0}^{N-1} \Phi\left(v_t^{i\,\prime}\right) \cdot \cos^{p}\left(\alpha_{t+1}^{i}{}^{\prime}\right) \cdot \mathbb{1}_{[\alpha_{cut-in};\alpha_{cut-out}]}\left(\alpha_{t+1}^{i}{}^{\prime}\right)$$

with $\forall i \in [\![0; N-1]\!]$

$$v_t^{i\,\prime} = f_{simulation}^{i}\left(K_t^{\prime}, V_t^{\prime}, \left\{\alpha_{t+1}^{i}{}^{\prime}\right\}_{i\in[\![0;N-1]\!]}\right)$$

$$\alpha_{t+1}^{i}{}^{\prime} = f_{yaw}\left(K_t^{\prime}, \beta_{t+1}^{i}\right)$$

$$\beta_{t+1}^{i} = f_{control}\left(\beta_t^{i}, u_t^{i}\right)$$

Regarding the second component C2, one may consider propagating the equations of the first component C1 for further time instants $\{t+k\}_{k\in[\![0;L]\!]}$, thus leading to an optimal second component C2* respecting the following set of equations:

[10]

$$C2^{*} = \frac{1}{N} \cdot \sum_{k=1}^{L} \sum_{i=0}^{N-1} \Phi\left(v_{t+k}^{i}{}^{\prime}\right) \cdot \cos^{p}\left(\alpha_{t+1}^{i}{}^{\prime}\right) \cdot \mathbb{1}_{[\alpha_{cut-in};\alpha_{cut-out}]}\left(\alpha_{t+1}^{i}{}^{\prime}\right)$$

with $\forall k \in [\![1; L]\!], \forall i \in [\![0; N-1]\!]$

$$v_{t+k}^{i}{}^{\prime} = f_{simulation}^{i}\left(K_{t+k}^{\prime}, V_{t+k}^{\prime}, \left\{\alpha_{t+k+1}^{i}{}^{\prime}\right\}_{i\in[\![0;N-1]\!]}\right)$$

$$\alpha_{t+k+1}^{i}{}^{\prime} = f_{yaw}\left(K_{t+k}^{\prime}, \beta_{t+k+1}^{i}\right)$$

$$\beta_{t+k+1}^{i} = f_{control}\left(\beta_{t+k}^{i}, u_{t+k}^{i}\right)$$

With such consideration, the optimization problem would be a MPC (Model Predictive Control) problem that may be written as follow:

[11]

$$\underset{\{u_{t+k}^i\}_{k\in[\![0;L]\!],i\in[\![0;N-1]\!]}}{max} \frac{1}{N}\sum_{k=0}^{L}\sum_{i=0}^{N-1}\Phi\big(v_{t+k}^{i}{}'\big).cos^p\big(\alpha_{t+1}^{i}\big).\mathbb{1}_{[\alpha_{cut-in};\alpha_{cut-out}]}\big(\alpha_{t+1}^{i}{}'\big)$$

subject to

$$u_{min} \le u_{t+k}^i \le u_{max}, \forall\, k \in [\![0;L]\!], \forall\, i \in [\![0;N-1]\!]$$

with $\forall k \in [\![0;L]\!], \forall i \in [\![0;N-1]\!]$

$$v_{t+k}^{i}{}' = f_{simulation}^i\left(K_{t+k}', V_{t+k}', \{\alpha_{t+k+1}^{i}{}'\}_{i\in[\![0;N-1]\!]}\right)$$

$$\alpha_{t+k+1}^{i}{}' = f_{yaw}\big(K_{t+k}', \beta_{t+k+1}^{i}\big)$$

$$\beta_{t+k+1}^{i} = f_{control}\big(\beta_{t+k}^{i}, u_{t+k}^{i}\big)$$

where $u_{min}$ and $u_{max}$ are rotation command bounds that cannot be exceeded, forming a constraints of the problem.

The MPC problem is strongly complex since it takes into consideration, for each time instant $\{t+k\}_{k\in[\![0;L]\!]}$, and for each wind turbine 15i, the corresponding local wind velocity $v_{t+k}^{i}{}'$. As already presented, said local wind velocities $\{v_{t+k}^{i}{}'\}_{k\in[\![0;L]\!],i\in[\![0;N-1]\!]}$ depends on the wake effect, i.e. on the influence of other wind turbines 15i at preceding time instants.

In particular, for an arbitrary chosen wind turbines 15i and for an arbitrary chosen time instant $t+k$, the wake effect at said time instant $t+k$ depends on the relative yaw angles $\{\alpha_{t+k+1}^{i}{}'\}_{i\in[\![0;N-2]\!]}$ of each wind turbines 15i, at the next time instant $t+k+1$, i.e. on both the absolute yaw angles $\{\beta_{t+k}^{i}\}_{i\in[\![0;N-1]\!]}$ and the rotation commands $\{u_{t+k}^{i}\}_{i\in[\![0;N-1]\!]}$ at said time instant $t+k$, cf equations [1] and [2]. However, each absolute yaw angle $\beta_{t+k}^{i}$ depends on the rotation commands $u_{t+k-1}^{i}$ at the preceding time instant, cf equation [1]. It leads that, determining the local wind velocities $\{v_{t+k}^{i}\}_{i\in[\![0;N-1]\!]}$ for time instants $t+k$, further than time instant $t+1$, is strongly complex and requires a lot of simulations.

Consequently, the second component C2 is simplified compared to the optimal second component C2* so that the second component C2 depends on a calculated rotation command $\{\hat{u}_{t+k}^{i}\}_{k\in[\![1;L]\!]}$ for the wind turbines (15i) to rotate toward the estimated wind directions $(\{K_{t+k}'\}_{k\in[\![1;L]\!]})$ for each further time instant $(\{t+k\}_{k\in[\![1;L]\!]})$.

Such calculated rotation command $\hat{u}_{t+k}^{i}$, is obtained by any controller able to determine analytically rotation commands from the other parameters. It is understood by "analytically", that it exists a formula for determining such command without any optimization.

For example, such calculated rotation command $\hat{u}_{t+k}^{i}$ preferably respects the following equation, denoted naive controller:

[12]

$$\hat{u}_{t+k}^i = clip\left(f_{yaw}(K_{t+k}', \beta_{t+k+1}^i), u_{min}, u_{max}\right)$$

where *clip* is a clipping function.

In other words, *clip* is the function determining each calculated rotation command $\hat{u}_{t+k}^i$, as:

- the one making the relative yaw angle $\alpha_{t+k+1}^i{}' = f_{yaw}\left(K_{t+k}', \beta_{t+k+1}^i\right)$ equal to zero, if feasible, i.e. comprised between the lower $u_{min}$ and upper $u_{max}$ bounds, or

- the one among the bounds $u_{min}, u_{max}$ minimizing the relative yaw angle $\alpha_{t+k+1}^i{}' = f_{yaw}\left(K_{t+k}', \beta_{t+k+1}^i\right)$, else case.

Preferably, the second component *C2* comprises, for each further time instant $\{t+k\}_{k\in[\![1;L]\!]}$, a temporal variable $C2_{t+k}$.

Preferably, the second component *C2* is the sum of each temporal variable $C2_{t+k}$ such that:

[13]

$$C2 = \sum_{k=1}^{L} C2_{t+k}$$

Each temporal variable $C2_{t+k}$ comprises a second contribution $C2_{t+k}^i$ for each wind turbine 15i.

Each second contribution $\{C2_{t+k}^i\}_{i\in[\![0;N-1]\!]}$ depends on an expected relative yaw angle $\hat{\alpha}_{t+k+1}^i{}'$ between the wind turbine 15i and the wind direction $K'_{t+k}$, considering that the wind turbine 15i implemented the calculated rotation command $\hat{u}_{t+k}^i$.

To this end, compared to the optimal second component *C2\**, in each second contribution $\{C2_{t+k}^i\}_{i\in[\![0;N-1]\!]}$, each relative yaw angle $\alpha_{t+k+1}^i{}'$, depending on the rotation command $u_{t+k}^i$, is replaced by the expected relative yaw angle $\hat{\alpha}_{t+k+1}^i{}'$ if the naive controller was used instead. It reduces the complexity coming from the optimization, as the naive controller provide an explicit solution, i.e. a calculated rotation command $\hat{u}_{t+k}^i$ without requiring solving an optimization problem but directly from a formula, as show in equation [12].

Preferably, the cosine function at power *p* of each relative yaw angle $\alpha_{t+k+1}^i{}'$ is replaced with a simpler penalization for relative yaw misalignment. The penalization chosen corresponds to one minus the normalized, absolute value of that expected relative yaw angle $\hat{\alpha}_{t+k+1}^i{}'$. It provides linearity and a better interpretability. Mathematically, it corresponds, for each further time instant *t + k* to the following expression:

[14]

$$1 - \frac{1}{N} \cdot \frac{1}{180} \cdot \sum_{i=0}^{N-1} \left| \hat{\alpha}_{t+k+1}^i{}' \right|$$

Optionally, the indicator function

$$\mathbb{1}_{[\alpha_{cut-in};\alpha_{cut-out}]}\left(\alpha_{t+k+1}^{i}{'}\right)$$

is removed so that there is no discontinuity. Even if an expected relative yaw angle $\hat{\alpha}_{t+k+1}^{i}$ is too great, it can be of some interest for the optimization to know about the potential power output. The more a wind turbine 15i is misaligned, the less likely it will be to produce energy and the more it will be penalized.

Preferably, each temporal variable $C2_{t+k}$ comprises a factor $\gamma^{k-1}$, denoted discount factor $\gamma^{k-1}$, making decrease the influence, on the second component $C2$, of temporal variable $C2_{t+k}$ as a function of the further time instants $\{t+k\}_{k\in[\![1;L]\!]}$ remoting from the initial time instant $t$. It gives more importance to temporal variables $C2_{t+k}$ closed to the initial time instant $t$ than to the temporal variables $C2_{t+k}$ remote from the initial time instant $t$.

For example, the discount factor $\gamma^{k-1}$ is formed by considering a predefined value $\gamma$ at the power of: $k$ minus 1. Preferably, the predefined value $\gamma$ is comprised between 0 and 1.

Preferably, compared to the optimal second component $C2^{*}$, in each of the temporal variable $C2_{t+k}$, each local wind velocity $v_{t+k}^{i}{'}$ is replaced by any wind velocity which does not depend on any simulation process. As an example, each local wind velocity $v_{t+k}^{i}{'}$ is replaced by the estimated general wind velocity $V'_{t+k}$. This approximation corresponds to considering that for further time instants $t+k$, the wind $W$ is received by each wind turbine 15i with the general wind velocity $V'_{t+k}$ thus neglecting the wake effect for further time instants $t+k$. It reduces the complexity coming from the simulation since it is not require to use a simulation for time instants further than the initial time instant $t$.

In an example, each temporal variable $C2_{t+k}$ is equal to:

[15]

$$C2_{t+k} = \gamma^{k-1}.\Phi(V'_{t+k}).\left(1 - \frac{1}{N}.\frac{1}{180}.\sum_{i=0}^{N-1}|\hat{\alpha}_{t+k+1}^{i}{'}|\right)$$

In said example, it leads that the second component $C2$ is equal to:

[16]

$$C2 = \sum_{k=1}^{L} \gamma^{k-1}.\Phi(V'_{t+k}).\left(1 - \frac{1}{N}.\frac{1}{180}.\sum_{i=0}^{N-1}|\hat{\alpha}_{t+k+1}^{i}{'}|\right)$$

Finally, merging equations [1], [2], [12], and [16], a complete form of the second component $C2$ is for example according to the following set of equations:

[17]

$$C2 = \sum_{k=1}^{L} \gamma^{k-1}.\Phi(V'_{t+k}).\left(1 - \frac{1}{N}.\frac{1}{180}.\sum_{i=0}^{N-1}|\hat{\alpha}_{t+k+1}^{i}{'}|\right)$$

with:

$$\hat{\alpha}_{t+k+1}^{i} = f_{yaw}\left(K_{t+k}, \hat{\beta}_{t+k+1}^{i}\right)$$

$$\hat{\beta}_{t+k+1}^{i} = f_{control}\left(\hat{\beta}_{t+k}^{i}, \hat{u}_{t+k}^{i}\right)$$

$$\hat{\beta}_{t+1}^{i} = f_{control}\left(\beta_{t}^{i}, u_{t}^{i}\right)$$

$$\hat{u}^i_{t+k} = clip\left(f_{yaw}\left(K'_{t+k}, \beta^i_{t+k+1}\right), u_{min}, u_{max}\right)$$

In equations [17], the expression $\hat{\beta}^i_{t+1} = f_{control}\left(\beta^i_t, u^i_t\right)$ ensures a continuity between the first C1 and the second C2 components.

The second component C2 forms an heuristic of the first component C1.

Because this heuristic C2 depends on neither the future optimized yaw settings (naive control), nor the future local velocities (no simulation), it does not increase complexity. The heuristic C2 is a scalar acting as a penalization for the optimization.

One may notice that the second component C2, i.e. the heuristic, only depends on:

- the absolute yaw angle $\beta^i_t$ of each wind turbine 15i at the initial time instant $t$,

- on each rotation command $u^i_t$ at said time instant first $t$,

- the set $\{V'_{t+k}\}_{k \in [\![1;L]\!]}$ of estimated general wind velocities at each further time instant $\{t+k\}_{k \in [\![1;L]\!]}$, and

- the set $\{K'_{t+k}\}_{k \in [\![1;L]\!]}$ of estimated wind directions at each further time instant $\{t+k\}_{k \in [\![1;L]\!]}$.

Actually, each calculated rotation command $\hat{u}^i_{t+k}$ is open-loop determined, i.e. determined only based on the parameter of the heuristic C2 without requiring any optimization process.

In a sense, the heuristic C2 is the discounted, weighted sum of the future theoretical power outputs. Thus the heuristic C2 evaluates how well the wind turbines 15i will manage to stay aligned with the each estimated wind direction $K'_{t+k}$.

Based on the example of first C1 and second C2 components, the optimization problem solved by the calculating module 60, further denoted simplified optimization problem, is for example the following:

$$[18]$$

$$\max_{\{u^i_t\}_{i \in [\![0,N-1]\!]}} f_{obj} = C1 + C2$$

subject to

$$u_{min} \leq u^i_t \leq u_{max}, \forall i \in [\![0; N-1]\!]$$

with $\forall k \in [\![0, L]\!], \forall i \in [\![0, L]\!]$

$$\hat{\alpha}^i_{t+k+1}{}' = f_{yaw}\left(K_{t+k}, \hat{\beta}^i_{t+k+1}\right)$$

$$\hat{\beta}^i_{t+k+1} = f_{control}\left(\hat{\beta}^i_{t+k}, \hat{u}^i_{t+k}\right)$$

$$\hat{u}^i_{t+k} = clip\left(f_{yaw}\left(K'_{t+k}, \beta^i_{t+k+1}\right), u_{min}, u_{max}\right)$$

$$\hat{\beta}^i_{t+1} = f_{control}\left(\beta^i_t, u^i_t\right)$$

$$v^i_t{}' = f^i_{simulation}\left(K'_t, V'_t, \{\alpha^i_{t+1}{}'\}_{i \in [\![0;N-1]\!]}\right)$$

$$\alpha_{t+1}^{i}{}' = f_{yaw}\left(K_{t}', \beta_{t}^{i}\right)$$

$$\beta_{t+1}^{i} = f_{control}\left(\beta_{t}^{i}, u_{t}^{i}\right)$$

Preferably, the calculating module 60 is configured to solve is the simplified optimization problem of equation [18].

One may notice that an advantage of the simplified optimization problem compared to the MPC problem, is that it considerably reduces the amount of parameter to optimize by only optimizing the rotation commands $u_{t}^{i}$ at the initial time instant $t$. Actually, in the second component C2, the calculated rotation commands $\left\{\hat{u}_{t+k}^{i}\right\}_{k\in[\![1;L]\!],i\in[\![0;N-1]\!]}$ are open-loop determined, i.e. it exists a formula determining each calculated rotation command $\hat{u}_{t+k}^{i}$ from the other parameters of the simplified optimization problem, without requiring performing any optimization. In other words, given a rotation command $u_{t}^{i}$, it exists a unique set of calculated rotation commands $\left\{\hat{u}_{t+k}^{i}\right\}_{k\in[\![1;L]\!],i\in[\![0;N-1]\!]}$, each depending analytically on the other parameters, maximizing the second component C2.

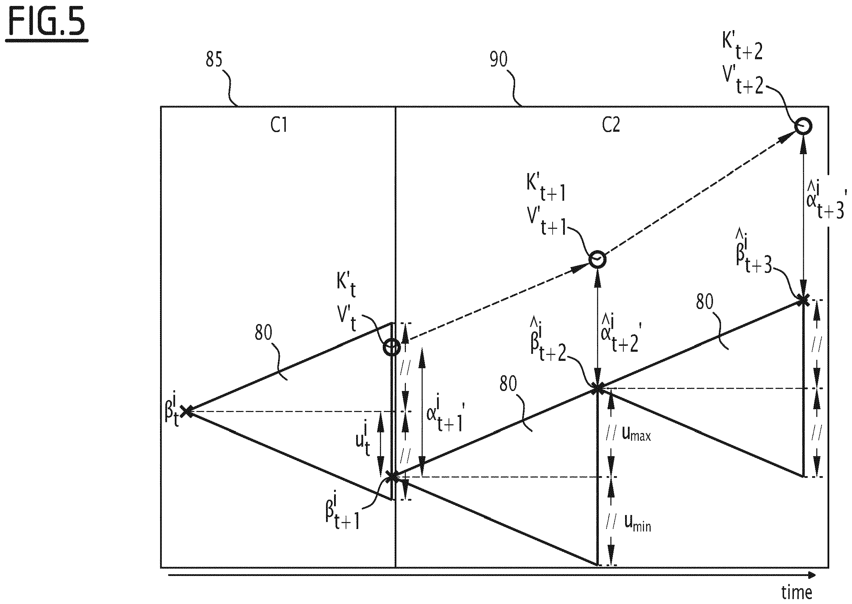

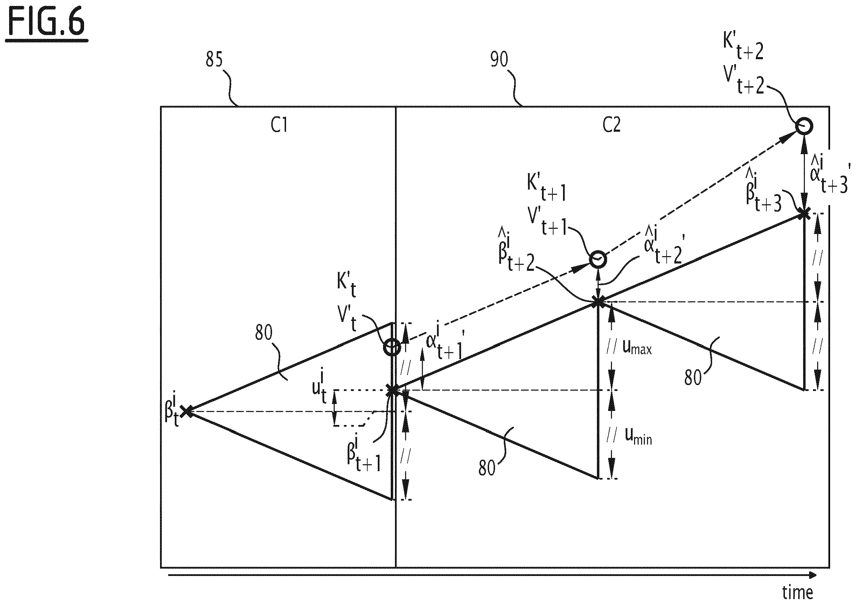

The principle of said simplified optimization problem is represented in Figures 5 and 6.

In Figure 5, the x-axis represents the succession of time instants $\{t+k\}_{k\in[\![0;3]\!]}$. In particular, the abscissa axis represents four time instants $t$, $t + 1$, $t + 2$, $t + 3$. In this Figure, the y-axis corresponds to yaw angles $\beta_{t}^{i}$, $\hat{\beta}_{t+1}^{i}$, $\hat{\beta}_{t+2}^{i}$, $\hat{\beta}_{t+3}^{i}$ and wind directions $K'_{t}$, $K'_{t+1}$, $K'_{t+2}$, $K'_{t+3}$ of a chosen wind turbine 15i.

In Figure 4, the crosses corresponds to the absolute yaw angles $\beta_{t}^{i}$, $\hat{\beta}_{t+1}^{i}$, $\hat{\beta}_{t+2}^{i}$, $\hat{\beta}_{t+3}^{i}$ at the successive time instants $\{t+k\}_{k\in[\![0;3]\!]}$. Each horizontal full line, starting from a respective cross, represents the projection the absolute yaw angle $\beta_{t}^{i}$, $\hat{\beta}_{t+1}^{i}$, $\hat{\beta}_{t+2}^{i}$, on the next time instant, if no control is performed, i.e. $\hat{\beta}_{t+k+1}^{i} = \beta_{t+k}^{i}$. At each further time instant, a distance between said projection and the corresponding cross, i.e. the actual value of the absolute yaw angle $\hat{\beta}_{t+k+1}^{i}$, is the rotation command $u_{t+k}^{i}$, or calculated rotation command $\hat{u}_{t+k}^{i}$ at the preceding time instant.

The triangles 80 formed from each cross and extending until the next time instant correspond to the range of rotation command $u_{t+k}^{i}$ that are feasible for the next time instant, such that the absolute yaw angle $\hat{\beta}_{t+k+1}^{i}$ at the next time instant $t + k + 1$ is comprised between $\hat{\beta}_{t+k}^{i} + u_{min}$ and $\hat{\beta}_{t+k}^{i} + u_{max}$. The limits of said triangle 80 are defined by the lower $u_{min}$ and upper $u_{max}$ bounds.

Still in Figure 5, the circles corresponds to the estimated wind direction $\{K'_{t+k}\}_{k\in[\![0;3]\!]}$ at each time instant $\{t+k\}_{k\in[\![0;3]\!]}$.

At each time instant $t + k$, the distance between the cross and the circle corresponds to the relative yaw angle $\alpha_{t+k}^{i}{}'$ at said time instant $t + k$.

Figure 5 is divided into a first part 85 and a second part 90. The first part 85 corresponds to the first component C1 and the second part 90 corresponds to the second component C2 of the power quantity $f_{obj}$.

The first part 85 only corresponds to the initial time instant $t$ and the incidence, on the next time instant $t + 1$, of the rotation command $u_{t}^{i}$ determined at said time instant $t$. The determination said rotation command $u_{t}^{i}$ results from the optimization of the first component C1 as it is described below. Thus a real optimization is performed on the first part 85.

The second part 90 corresponds to the further time instants $\{t+k\}_{k\in[\![1;3]\!]}$ and the expected absolute yaw

angles $\{\hat{\beta}_{t+k}^{i}\}_{k\in[\![1;3]\!]}$ induced by the calculated rotation commands $\{\hat{u}_{t+k}^{i}\}_{k\in[\![1;3]\!]}$ determined by a naive controller.

In other words, the calculated rotation commands $\{\hat{u}_{t+k}^{i}\}_{k\in[\![1;3]\!]}$ are determined to reduce as much as possible, for each next time instant $t + k + 1$, the expected relative yaw angles $\hat{\alpha}_{t+k+1}^{i}$.

Since each calculated rotation command $\{\hat{u}_{t+k}^{i}\}_{k\in[\![1;3]\!]}$ is limited by the bounds $u_{min}$, $u_{max}$, it is clear that the rotation command $u_t^i$ at the initial time instant $t$ has an important incidence on the reachable expected relative yaw angles $\{\hat{\alpha}_{t+k}^{i}\}_{k\in[\![1;3]\!]}$ for further time instants $\{t + k\}_{k\in[\![1;3]\!]}$.

Figure 6 is the same figure as Figure 5 except that rotation command $u_t^i$ at the initial time instant $t$ is distinct as for Figure 5.

One may notice that such difference has a consequence each next time instants, resulting in higher expected relative yaw angles $\{\hat{\alpha}_{t+k}^{i}\}_{k\in[\![1;3]\!]}$, and thus in a lower value of the second component $C2$.

By comparing Figure 5 and 6, one may better understand that the second component $C2$ forms a penalization of the first component $C1$ since the reached values of the second component $C2$ is strongly influenced by the optimization performed for the first component $C1$.

In the simplified optimization problem, by choosing certain rotation command $u_t^i$ for the initial time instant $t$, the heuristic $C2$ uses a naive controller over a future time horizon of L time instants $t + k$ to evaluate how well the wind turbines 15i will manage to stay aligned with the predicted wind directions $K_{t+k}'$.

For example, if the future expected power outputs are high, the heuristic $C2$ will encourage a rotation commands $u_t^i$ that will put the wind turbines 15i in good orientations for the future. Thus, in such case the heuristic $C2$ will penalize the first component $C1$ for rotation commands $u_t^i$ that would prevent wind turbines 15i from keeping track of the wind direction $K_{t+k}'$.

To solve the simplified optimization problem, the calculating module 60 is preferably configured to obtain, for each wind turbine 15i, one rotation command candidate $\tilde{u}_t^i$, denoted candidate $\tilde{u}_t^i$, forming a set of candidates $\{\tilde{u}_t^i\}_{i\in[\![0;N-1]\!]}$ comprising a respective candidate $\tilde{u}_t^i$ for each wind turbines 15i .

The calculating module 60 is then configured to determine, the corresponding local velocity $v_t^{i'}$, from:

-    the estimated wind direction $K_t'$,

-    the estimated general velocity of the wind $V_t'$, and

-    each candidate $\tilde{u}_t^i$.

To this end, the calculating module 60 is for example configured to implement equations [1], [2] and [8]. In that case, the calculating module 60 is, by the way, configured to determine corresponding relative yaw angles $\alpha_{t+1}^{i}{}'$, preferably based on equation [2].

The calculating module 60 is configured to then calculate the first component $C1$, from each corresponding local velocity $v_t^i$, and preferably from the corresponding relative yaw angles $\alpha_{t+1}^{i}{}'$.

The calculating module 60 is in addition configured to determine, for each further time instant $t + k$, the corresponding calculated rotation command $\{\hat{u}_{t+k}^{i}\}_{i\in[\![0;N-1]\!]}$ from the estimated wind direction $K_{t+k}'$ at said time instant $t + k$.

Preferably, the calculating module 60 is configured to implement equation [12]. In that case, the calculating module 60 is configured to determine each corresponding calculated rotation command $\hat{u}_{t+k}^i$ in addition from the expected absolute yaw angle $\hat{\beta}_{t+k}^i$ determined for the previous time instant $t + k$ - 1. For each wind turbine 15i, the expected absolute yaw angle $\hat{\beta}_{t+1}^i$ at the time instant $t + 1$ is preferably equal to the absolute yaw angle $\beta_{t+1}^i$ at said time instant $t + 1$, i.e. determined based on equation [1].

The calculating module 60 is further configured to calculate the corresponding second component $C2$ from the corresponding calculated rotation commands $\hat{u}_{t+k}^i$, for example by implementing equation [16].

The calculating module 60 is configured to then calculate the corresponding power quantity $f_{obj}$ from the first $C1$ and second $C2$ components.

The calculating module 60 is thus configured to iterate the preceding determinations and calculations for a plurality of rotation command candidate sets $\{\tilde{u}_t^i\}_{i\in[\![0;N-1]\!]}$.

The calculating module 60 is configured to then select the rotation commands $\{u_t^i\}_{i\in[\![0;N-1]\!]}$ as the set of rotation command candidate $\{\tilde{u}_t^i\}_{i\in[\![0;N-1]\!]}$, maximizing the power quantity $f_{obj}$.

The sending module 65 is configured to send each rotation command $u_t^i$ determined by the calculating module 60, to the corresponding wind turbine 15i, and in particular to its yaw actuator, so that said yaw actuator implement the received rotation command.

The optional pretreatment module 67 is configured apply a treatment on the estimated wind directions $\{K'_{t+k}\}_{k\in[\![0;L]\!]}$ on the wind farm to obtain treated wind directions $\{\overline{K}'_{t+k}\}_{k\in[\![0;L]\!]}$. As an example the treatment is a low-pass filtering. This makes it possible to smooth the estimated wind directions $\{K'_{t+k}\}_{k\in[\![0;L]\!]}$. With such treatment if a drastic change in the wind directions happens only for a short time, such change would not appear in the treated wind direction $\{\overline{K}'_{t+k}\}_{k\in[\![0;L]\!]}$ as important as in the estimated wind directions $\{K'_{t+k}\}_{k\in[\![0;L]\!]}$, since it would be damped by the low-pass filtering.

Preferably, the calculating module 60 is configured to perform its solving by using the treated wind directions $\{\overline{K}'_{t+k}\}_{k\in[\![0;L]\!]}$ instead of the estimated wind directions $\{K'_{t+k}\}_{k\in[\![0;L]\!]}$.

This is benefic since if the treated wind directions $\{\overline{K}'_{t+k}\}_{k\in[\![0;L]\!]}$ were not considered, for further time instant $\{t + k\}_{k\in[\![1;L]\!]}$, the simplified optimization problem aims a making the wind turbines tracking the estimated wind directions $\{K'_{t+k}\}_{k\in[\![1;L]\!]}$. However, if the considered directions comprise a fast change, the corresponding calculated rotation command(s) $\hat{u}_{t+k}^i$ would be clipped, i.e. equal to either $u_{min}$ or $u_{max}$, while it is not long term profitable.

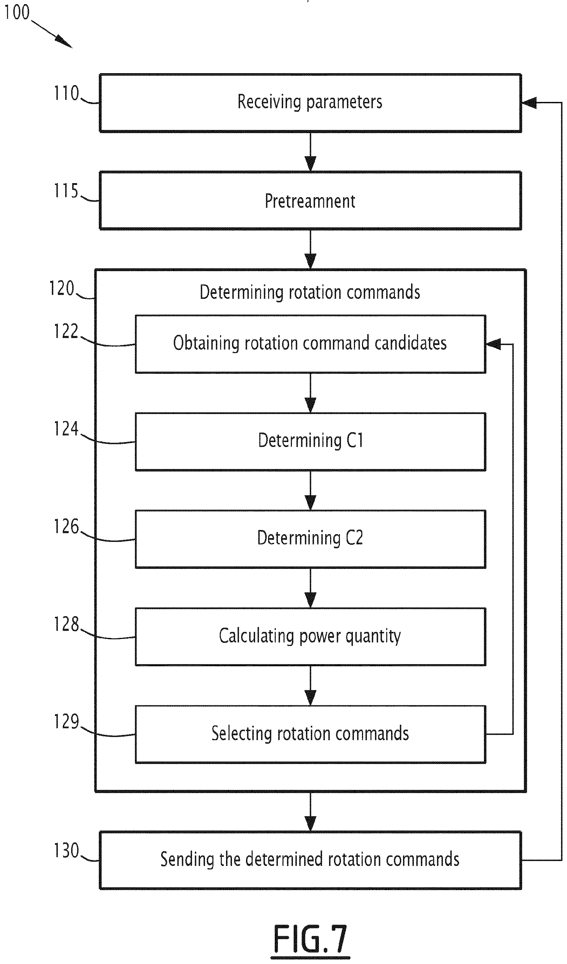

The functioning of wind farm 10 and in particular of the control system 20 will now be detailed by a control method 100 and in reference to figure 7 representing a flowchart of said control method 100.

At an initial time instant $t$, each wind turbines 15i has an absolute yaw angle $\beta_t^i$. Initially also, the general wind velocities $\{V'_{t+k}\}_{k\in[\![0;L]\!]}$ and wind directions $\{K'_{t+k}\}_{k\in[\![0;L]\!]}$ are estimated for each time instant $\{t + k\}_{k\in[\![0;L]\!]}$ over an horizon $L$, as previously described, preferably by the sensor 50.

The method 100 comprises a receiving step 110, during which the electronic control device 45 receives, for the set of successive time instants $\{t + k\}_{k\in[\![0;L]\!]}$, the estimated general wind velocities $\{V'_{t+k}\}_{k\in[\![0;L]\!]}$ and the estimated wind directions $\{K'_{t+k}\}_{k\in[\![0;L]\!]}$ of the wind $W$, on the wind farm 10.

Optionally, during the receiving step 110, the electronic control device 45 in addition receives the absolute yaw

angle $\beta_t^i$ of each wind turbine 15i.

Optionally, the method comprises a pretreatment step 115, wherein the electronic control device 45 apply a treatment on the estimated wind directions $\{K'_{t+k}\}_{k\in[\![0;L]\!]}$ on the wind farm to obtain treated wind directions $\{\overline{K}'_{t+k}\}_{k\in[\![0;L]\!]}$. Preferably, the treatment is a low-pass filtering.

The method 100 then comprises a determining step 120, during which the electronic control device 45 determined, for each wind turbine 15i, the respective rotation command $u_t^i$ from the set of estimated wind direction $\{K'_{t+k}\}_{k\in[\![0;L]\!]}$ and the set of velocity of the wind $\{V'_{t+k}\}_{k\in[\![0;L]\!]}$ on the wind farm 10, by solving an optimization problem as previously described.

The optimization problem aims at maximizing the power quantity $f_{obj}$ representative of a power generated by the wind farm 10 for said set of successive time instants $\{t+k\}_{k\in[\![0;L]\!]}$, the power quantity $f_{obj}$ comprising a first component $C1$ and a second component $C2$.

The first component $C1$ depends on the local wind velocity $v_t^{i'}$ at the contact of each wind turbine 15i at said initial time instant $t$, each local wind velocity $v_t^{i'}$ depending on the rotation command $u_t^i$ of each wind turbine 15i at said initial time instant $t$.

The second component $C2$ depends on a set of calculated rotation command $\{\hat{u}_{t+k}^i\}_{k\in[\![1;L]\!],i\in[\![1;N-1]\!]}$ for the wind turbines 15i to rotate toward the estimated wind directions $\{K'_{t+k}\}_{k\in[\![1;L]\!]}$ for each further time instant $\{t+k\}_{k\in[\![1;L]\!]}$.

If the control method 100 comprises the pretreatment step 115, during the determining step 120, the treated wind directions $\{\overline{K}'_{t+k}\}_{k\in[\![0;L]\!]}$ are used instead of the estimated wind directions $\{K'_{t+k}\}_{k\in[\![0;L]\!]}$

Preferably, said optimization problem is the simplified optimization problem of the set of equations [18].

To perform such solving, the determining step 120 preferably comprises an obtaining sub step 122, wherein, the electronic control device 45 obtains for each wind turbine 15i, a respective rotation command candidate $\tilde{u}_t^i$, forming the set of rotation command candidates $\{\tilde{u}_t^i\}_{i\in[\![0;N-1]\!]}$ for the wind farm 10, .

The set of rotation command candidates $\{\tilde{u}_t^i\}_{i\in[\![0;N-1]\!]}$ is preferably provided by gridding, for each wind turbine 15i, the space between the lower bound $u_{min}$ and the upper bound $u_{max}$, by a predefined number of points.

The determining step 120 then comprises a first determining sub step 124, wherein the electronic control device 45 determines the first component $C1$ from each local wind velocity $v_t^{i'}$ which depends on the set of obtained rotation command candidates $\{\tilde{u}_t^i\}_{i\in[\![0;N-1]\!]}$.

Preferably, each local wind velocity $v_t^{i'}$ is determined by performing a simulation of the wind W flowing in the wind farm, for example based on equation [8].

Preferably, the first component $C1$ is determined based on equation [7].

The determining step 120 then comprises a second determining sub step 126 wherein the electronic control device 45 determines the first component $C2$ from the calculated rotation commands $\{\hat{u}_{t+k}^i\}_{i\in[\![0;N-1]\!],k\in[\![1;L]\!]}$. The calculated rotation command $\{\hat{u}_{t+k}^i\}_{i\in[\![0;N-1]\!],k\in[\![1;L]\!]}$ are the command aiming at making the wind turbines 15i tracking the estimated wind directions $\{K'_{t+k}\}_{k\in[\![1;L]\!]}$ for each further time instant $\{t+k\}_{k\in[\![1;L]\!]}$.

Preferably, the calculated rotation command $\{\hat{u}_{t+k}^i\}_{i\in[\![0;N-1]\!],k\in[\![1;L]\!]}$ are determined from the estimated wind directions $\{K'_{t+k}\}_{k\in[\![1;L]\!]}$ and indirectly from the candidates $\{\tilde{u}_t^i\}_{i\in[\![0;N-1]\!]}$, for example based on equations [12] and [1].

Preferably, the second component $C2$ is determined based on equation [16].

The determining step 120 further comprises a calculating sub step 128, wherein the electronic control device 45 calculates the power quantity $f_{obj}$ from the first $C1$ and second $C2$ components, preferably by summing said components $C1$, $C2$.

During the determining step 120, said obtaining 122, determining 124, 126 and calculating 126 sub steps are iterated from a plurality of rotation command candidate sets $\{\tilde{u}_t^i\}_{i\in[\![0;N-1]\!]}$, thus leading to a respective power quantity $f_{obj}$ for each set $\{\tilde{u}_t^i\}_{i\in[\![0;N-1]\!]}$. The new candidate set is preferably also obtained from the aforementioned gridding.

The determining step 120 then comprises a selecting sub step 129, wherein the rotation commands $\{u_t^i\}_{i\in[\![0;N-1]\!]}$ are selected as the set of rotation command candidate $\{\tilde{u}_t^i\}_{i\in[\![0;N-1]\!]}$, maximizing the power quantity $f_{obj}$.

The control method 100 then comprises a sending step 130, wherein the electronic control device 45 send the determined rotation command $u_t^i$ to each respective wind turbine 15i for the rotation of each wind turbine 15i.

Optionally, the steps of the control method 100 are then iterated for the next time instant $t + 1$. As an example, in the next iteration, the initial time instant is the next time instant $t + 1$ of the preceding iteration. In the next iteration, the plurality of successive time instants extends from $t + 1$ until $t + L + 1$ so that the horizon, i.e. the number of time instants minus 1, remains equal to L.

Thanks to the electronic control device 45 and the control method 100 according to the invention, it possible to improve the wind farm control in order to output more power.

**Claims**

1. A control method (100) for controlling a wind farm (10) comprising a plurality of wind turbines (15i), based on a plurality of estimated general wind velocities $(\{V'_{t+k}\}_{k\in[\![0;L]\!]})$ and a plurality of estimated wind directions $(\{K'_{t+k}\}_{k\in[\![0;L]\!]})$ of the wind (W) on the wind farm (10),

   each wind turbine (15i) being configured, upon receiving a rotation command ( $u_t^i$ ), to rotate, around an elongation axis (E) respective of the wind turbine (15i), according to said rotation command ( $u_t^i$ ),

   the method (100) being implemented by an electronic control device (45) and comprising the following steps at an initial time instant ($t$):

   - receiving (110), for a set of successive time instants $(\{t + k\}_{k\in[\![0;L]\!]})$, estimated general wind velocities $(\{V'_{t+k}\}_{k\in[\![0;L]\!]})$ and estimated wind directions $(\{K'_{t+k}\}_{k\in[\![0;L]\!]})$ of wind (W), on the wind farm (10), each estimated general wind velocity and each estimated wind direction being associated to a respective time instant;

   - for said initial time instant ($t$), determining (120), for each wind turbine (15i), a respective rotation command $(u_t^i)$ from the set of estimated wind directions $(\{K'_{t+k}\}_{k\in[\![0;L]\!]})$ and the set of velocities of the wind $(\{V'_{t+k}\}_{k\in[\![0;L]\!]})$ on the wind farm (10), by solving an optimization problem,

the optimization problem aiming at maximizing a power quantity $(f_{obj})$ representative of a power generated by the wind farm (10) for said set of successive time instants $\left(\{t + k\}_{k \in [\![0;L]\!]}\right)$, the power quantity $(f_{obj})$ comprising a first component $(C1)$ and a second component $(C2)$,

the first component $(C1)$ depending on a local wind velocity $\left(v_t^{i\prime}\right)$ at the contact of each wind turbine (15i) at said initial time instant $(t)$, each local wind velocity $\left(v_t^{i\prime}\right)$ depending on the rotation command $\left(u_t^i\right)$ of each wind turbine (15i) at said initial time instant $(t)$,

the second component $(C2)$ depending on a set of calculated rotation commands $\left(\{\hat{u}_{t+k}^i\}_{k \in [\![1;L]\!], i \in [\![1;N-1]\!]}\right)$ for the wind turbines (15i) to rotate toward the estimated wind directions $\left(\{K_{t+k}^\prime\}_{k \in [\![1;L]\!]}\right)$ for each further time instant $\left(\{t + k\}_{k \in [\![1;L]\!]}\right)$,

- sending (130) the determined rotation command $\left(u_t^i\right)$ to each respective wind turbine (15i) for the rotation of each wind turbine (15i).

2. The control method (100) according to the preceding claim, wherein each local wind velocity $\left(v_t^{i\prime}\right)$ is obtained by simulating the influence of each wind turbine (15i) on the wind $(W)$ reaching the other wind turbines.

3. The control method (100) according to claim 1 or 2, wherein each rotation command $\left(u_t^i\right)$ is comprised between a lower bound $(u_{min})$ and an upper bound $(u_{max})$.

4. The control method (100) according to any of the preceding claims, wherein the receiving (110), determining (120) and sending (130) steps are iterated several times.

5. The method (100) according to any of the preceding claims, wherein the first component $(C1)$ further depends on the relative yaw angle $\left(\alpha_{t+1}^{i}{}^\prime\right)$ between a blade's rotation axis $(R)$ of each wind turbine (15i) and the wind direction $(K_t^\prime)$, each relative yaw angle $\left(\alpha_{t+1}^{i}{}^\prime\right)$ being determined based on the rotation command $\left(u_t^i\right)$ of the considered wind turbine (15i) at said initial time instant $(t)$.

6. The control method (100) according to claim 5, wherein the first component $(C1)$ comprises a first contribution $(C1^i)$ for each wind turbine (15i),

each first contribution $(C1^i)$ being equal to zero if the respective relative yaw angle $\left(\alpha_{t+1}^{i}{}^\prime\right)$ between a blade's rotation axis $(R)$ of each wind turbine (15i) and the wind direction $(K_t^\prime)$ is lower than a cut-in angle value $(\alpha_{cut\text{-}in})$ or higher than a cut-out angle value $(\alpha_{cut\text{-}out})$,

each first contribution $(C1^i)$ depending on the local wind velocity $\left(v_t^{i\prime}\right)$ and the relative yaw angle $\left(\alpha_{t+1}^{i}{}^\prime\right)$, if said relative yaw angle $\left(\alpha_{t+1}^{i}{}^\prime\right)$ is comprised between the cut-in angle value $(\alpha_{cut\text{-}in})$ and the cut-out angle value $(\alpha_{cut\text{-}out})$.

7. The control method (100) according to claim 6, wherein the first component $(C1)$ is equal to:

$$C1 = \sum_{i=0}^{N-1} C1^i = \frac{1}{N} \sum_{i=0}^{N-1} \Phi\left(v_t^{i\prime}\right) \cdot \cos^p\left(\alpha_{t+1}^{i}{}^\prime\right) \cdot \mathbb{1}_{[\alpha_{cut-in};\alpha_{cut-out}]}\left(\alpha_{t+1}^{i}{}^\prime\right)$$

wherein:

$\Phi(v_t^{i'})$ is the theoretical power ($\Phi$) output from a wind turbine (15i) facing a wind with a local wind velocity $v_t^{i'}$,

$\cos^p(\alpha_{t+1}^{i}{}')$ is the cosine of the relative yaw angle $(\alpha_{t+1}^{i}{}')$ at the power of p, representing the influence of a misalignement between the wind turbine (15i) and the wind direction ($K'_t$),

$$\mathbb{1}_{[\alpha_{cut-in};\alpha_{cut-out}]}(\alpha_{t+1}^{i}{}')$$

is the indicator function equal to 1 if the relative yaw angle $(\alpha_t^{i'})$ is comprised between the cut-in ($\alpha_{cut-in}$) and cut-out ($\alpha_{cut-out}$) angle values, and 0 else case, and

N is the number of wind turbines (15i) in the wind farm (10).

8. The control method (100) according to any of the preceding claims, wherein the second component (C2) comprises, for each further time instant $(\{t+k\}_{k\in[\![1;L]\!]})$, a temporal variable ($C2_{t+k}$),

each temporal variable ($C2_{t+k}$) comprising a second contribution $(C2_{t+k}^{i})$ for each wind turbine (15i),

each second contribution $(C2_{t+k}^{i})$ depending on an expected relative yaw angle $(\hat{\alpha}_{t+k+1}^{i}{}')$ between the wind turbine (15i) and the wind direction ($K'_{t+k}$), considering that the wind turbine (15i) implemented the calculated rotation command $(\hat{u}_{t+k}^{i})$.

9. The control method (100) according to claim 8, wherein each temporal variable ($C2_{t+k}$) comprises a factor ($\gamma^{k-1}$) making decrease the influence, on the second component (C2), of temporal variable ($C2_{t+k}$) as a function of the further time instants $(\{t+k\}_{k\in[\![1;L]\!]})$ remoting from the initial time instant (t).

10. The control method (100) according to claim 8 or 9, wherein the second component (C2) is equal to

$$C2 = \sum_{k=1}^{L} \gamma^{k-1} \Phi(V'_{t+k})\left(1 - \frac{1}{N}\frac{1}{180}\sum_{i=0}^{N-1}|\hat{\alpha}_{t+k+1}^{i}{}'|\right)$$

wherein:

y is a predefined value defining the factor ($\gamma^{k-1}$),

$\Phi(V'_{t+k})$ is the theoretical power output from a wind turbine (15i) facing a wind with a general wind velocity equal to $V'_{t+k}$,

$\hat{\alpha}_{t+k+1}^{i}{}'$ is the expected relative yaw angle at a further time instant $t + k + 1$,

L is the number of considered time instants $(\{t+k\}_{k\in[\![0;L]\!]})$, and

N is the number of wind turbines (15i) in the wind farm (10).

11. The control method (100) according to any of the preceding claims, wherein, at each further time instant $(\{t+k\}_{k\in[\![1;L]\!]})$, each calculated rotation command $(\hat{u}_{t+k}^{i})$ is determined:

- by aligning the wind turbine (15i) toward the wind direction $(K'_{t+k})$ if said calculated rotation command $(\hat{u}^i_{t+k})$ is comprised between a lower bound ($u_{min}$) and an upper bound ($u_{max}$), or

- by selecting, among the lower bound ($u_{min}$) and the upper bound ($u_{max}$), the one minimizing the expected relative yaw angle $(\hat{a}^i_{t+k+1}{}')$ else case.

12. The control method (100) according to any of the preceding claims, wherein the step (120) of determining the rotation commands $\left(\{u^i_t\}_{i\in[\![0;N-1]\!]}\right)$, comprises the following sub steps:

- obtaining (122), for each wind turbine (15i), a respective rotation command candidate $(\tilde{u}^i_t)$, forming a set of rotation command candidates $\left(\{\tilde{u}^i_t\}_{i\in[\![0;N-1]\!]}\right)$ for the wind farm (10),

- determining (124) the first component (C1) by:

+ determining, for each wind turbine (15i), the local wind velocity $(v^{i'}_t)$ of said wind turbine (15i), from the estimated wind direction $(K'_t)$ at the initial time instant ($t$), from the estimated general velocity of the wind $(V'_t)$ at the initial time instant ($t$), and from the set of rotation command candidates $\left(\{\tilde{u}^i_t\}_{i\in[\![0;N-1]\!]}\right)$,

+ calculating the first component (C1) from each local wind velocity $(v^{i'}_t)$,

- determining (126) the second component (C2) by:

+ for each other further time instants $(\{t+k\}_{k\in[\![1;L]\!]})$, determining the calculated rotation command $(\hat{u}^i_{t+k})$ from the estimated wind direction $(K'_{t+k})$ at said time instant further ($t+k$),

+ calculating the second component (C2) from each calculated rotation commands $(\hat{u}^i_{t+k})$, and

- calculating (128) the power quantity ($f_{obj}$) from the first (C1) and second (C2) components,

the sub steps of obtaining (122), determining (124, 126) and calculating (128) being iterated for a plurality of rotation command candidates sets $\left(\{\tilde{u}^i_t\}_{i\in[\![0;N-1]\!]}\right)$,

the step (120) of determining the rotation command $\left(\{u^i_t\}_{i\in[\![0;N-1]\!]}\right)$ in addition comprising the sub step (129) of selecting the rotation commands $\left(\{u^i_t\}_{i\in[\![0;N-1]\!]}\right)$ as the set of rotation command candidate $\left(\{\tilde{u}^i_t\}_{i\in[\![0;N-1]\!]}\right)$, maximizing the power quantity ($f_{obj}$).

13. The control method (100) according to any of the preceding claims, comprising between the receiving step (110) and the determining step (120), a pretreatment step (115), wherein a treatment is applied on the estimated wind directions $\left(\{K'_{t+k}\}_{k\in[\![0;L]\!]}\right)$ on the wind farm to obtain treated wind directions $\left(\{\overline{K}'_{t+k}\}_{k\in[\![0;L]\!]}\right)$, the determining step (120) using the treated wind directions $\left(\{\overline{K}'_{t+k}\}_{k\in[\![0;L]\!]}\right)$ instead of the estimated wind directions $\left(\{K'_{t+k}\}_{k\in[\![0;L]\!]}\right)$,
preferably, the treatment being a low-pass filtering.

**14.** A computer program product comprising instructions which, when being executed by a computer, implement a control method (100) according to any of the preceding claims.

**15.** An electronic control device (45) for controlling a wind farm (10) comprising a plurality of wind turbines (15i), based on a plurality of estimated general wind velocities $\left(\{V'_{t+k}\}_{k\in[\![0;L]\!]}\right)$ and a plurality of estimated wind directions direction $\left(\{K'_{t+k}\}_{k\in[\![0;L]\!]}\right)$ of the wind (W) on the wind farm (10),

each wind turbine (15i) being configured, upon receiving a rotation command $\left(u_t^i\right)$, to rotate, around an elongation axis (E) respective of the wind turbine (15i), accordingly with the rotation command $\left(u_t^i\right)$, the electronic control device (45) comprising:

- a receiving module (55) configured to receive, at an initial time instant (t), estimated general wind velocities $\left(\{V'_{t+k}\}_{k\in[\![0;L]\!]}\right)$ and estimated wind directions $\left(\{K'_{t+k}\}_{k\in[\![0;L]\!]}\right)$ of the wind, on the wind farm (10) for a set of successive time instants $\left(\{t+k\}_{k\in[\![0;L]\!]}\right)$, each estimated general wind velocity $\left(\{V'_{t+k}\}_{k\in[\![0;L]\!]}\right)$ and each estimated wind direction $\left(\{K'_{t+k}\}_{k\in[\![0;L]\!]}\right)$ being associated to a respective time instant;
- a calculating module (60) configured to determine, for said initial time instant (t), a respective rotation command $\left(u_t^i\right)$ for each wind turbine (15i), from the set of estimated wind directions $\left(\{K'_{t+k}\}_{k\in[\![0;L]\!]}\right)$ and the set of estimated general wind velocities $\left(\{V'_{t+k}\}_{k\in[\![0;L]\!]}\right)$ on the wind farm (10), by solving an optimization problem,

the optimization problem aiming at maximizing a power quantity ($f_{obj}$) representative of a power generated by the wind farm (10) for said set of successive time instants $\left(\{t+k\}_{k\in[\![0;L]\!]}\right)$, the power quantity ($f_{obj}$) comprising a first component ($C1$) and a second component ($C2$),

the first component ($C1$) depending on a local wind velocity $\left(v_t^{i\prime}\right)$ at the contact of each wind turbine (15i) at said initial time instant (t), each local wind velocity $\left(v_t^{i\prime}\right)$ depending on the rotation command $\left(u_t^i\right)$ of each wind turbine (15i) at said initial time instant (t),

the second component ($C2$) depending on a set of calculated rotation commands $\left(\{\hat{u}_{t+k}^i\}_{k\in[\![1;L]\!],i\in[\![1;N-1]\!]}\right)$ for the wind turbines (15i) to rotate toward the estimated wind directions $\left(\{K'_{t+k}\}_{k\in[\![1;L]\!]}\right)$ for each further time instants $\left(\{t+k\}_{k\in[\![1;L]\!]}\right)$,

- a sending module (65) configured to send the determined rotation command $\left(u_t^i\right)$ to each respective wind turbine (15i) for the rotation of each wind turbine (15i).

EP 4 571 099 A1

FIG.1

**FIG.2**

$\alpha^i_{t+1}{}'$

$\beta^i_{t+1}$

R

W

E

15i

35

35

$K'_t$

FIG.3

FIG.4

# FIG.5

EP 4 571 099 A1

# FIG.6

EP 4 571 099 A1

100

110 — Receiving parameters

115 — Pretreamnent

120 — Determining rotation commands

122 — Obtaining rotation command candidates

124 — Determining C1

126 — Determining C2

128 — Calculating power quantity

129 — Selecting rotation commands

130 — Sending the determined rotation commands

## FIG.7

Europäisches
Patentamt

European
Patent Office

Office européen
des brevets

**EUROPEAN SEARCH REPORT**

**Application Number**

EP 23 30 7225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MEHDI VALI: "Adjoint-based model predictive control for optimal energy extraction in waked wind farms", CONTROL ENGINEERING PRACTICE., vol. 84, 1 March 2019 (2019-03-01), pages 48-62, XP093161937, GB ISSN: 0967-0661, DOI: 10.1016/j.conengprac.2018.11.005 * the whole document * | 1-15 | INV. F03D7/02 F03D7/04 |
| A | YIN XIUXING ET AL: "Reliability aware multi-objective predictive control for wind farm based on machine learning and heuristic optimizations", ENERGY, ELSEVIER, AMSTERDAM, NL, vol. 202, 1 May 2020 (2020-05-01), XP086162807, ISSN: 0360-5442, DOI: 10.1016/J.ENERGY.2020.117739 [retrieved on 2020-05-01] * the whole document * | 1-15 | |
| | | | TECHNICAL FIELDS SEARCHED (IPC) |
| | | | F03D |
| A | SIMLEY ERIC ET AL: "Wake Steering Wind Farm Control With Preview Wind Direction Information", 2021 AMERICAN CONTROL CONFERENCE (ACC), AMERICAN AUTOMATIC CONTROL COUNCIL, 25 May 2021 (2021-05-25), pages 1783-1789, XP033945911, DOI: 10.23919/ACC50511.2021.9483008 [retrieved on 2021-07-12] * the whole document * | 1-15 | |

-/--

The present search report has been drawn up for all claims

| Place of search | Date of completion of the search | Examiner |
|---|---|---|
| The Hague | 14 May 2024 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 23 30 7225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANNONI JENNIFER ET AL: "Efficient Optimization of Large Wind Farms for Real-Time Control", 2018 ANNUAL AMERICAN CONTROL CONFERENCE (ACC), AACC, 27 June 2018 (2018-06-27), pages 6200-6205, XP033386982, DOI: 10.23919/ACC.2018.8430751 [retrieved on 2018-08-09] * the whole document * | 1-15 | |
| A | YIN XIUXING ET AL: "Data driven learning model predictive control of offshore wind farms", INTERNATIONAL JOURNAL OF ELECTRICAL POWER & ENERGY SYSTEMS, JORDAN HILL, OXFORD, GB, vol. 127, 11 December 2020 (2020-12-11), XP086455341, ISSN: 0142-0615, DOI: 10.1016/J.IJEPES.2020.106639 [retrieved on 2020-12-11] * the whole document * | 1-15 | |

TECHNICAL FIELDS
SEARCHED (IPC)

The present search report has been drawn up for all claims

| Place of search | Date of completion of the search | Examiner |
|---|---|---|
| The Hague | 14 May 2024 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2